# EUROPÄISCHE PATENTSCHRIFT

(11) **EP 1 925 412 B1**
(45) Veröffentlichungstag und Bekanntmachung des Hinweises auf die Patenterteilung: **13.01.2010**
(21) Anmeldenummer: 06024117.1
(22) Anmeldetag: 21.11.2006
(51) Int. Cl.: B27D 5/00, B23Q 11/00

(54) **Kantenbearbeitungsaggregat**
Machining unit for edges
Unité d'usinage de chants

(43) Veröffentlichungstag der Anmeldung: 28.05.2008
(73) Patentinhaber: Brandt Kantentechnik GmbH, 32647 Lemgo (DE)
(72) Erfinder: Hund, Sebastian, 33813 Oerlinghausen (DE); Nope, Thomas, 32689 Kalletal (DE)
(74) Vertreter: HOFFMANN EITLE

(56) Entgegenhaltungen:
- DE-A1- 4 030 138
- DE-A1- 19 644 137
- FR-A1- 2 323 496
- US-A1- 2002 182 023

## Beschreibung

### Technisches Gebiet

Die Erfindung betrifft ein Bearbeitungsaggregat zur spanenden Bearbeitung von Werkstücken im Bereich einer Kante, nach dem Oberbegriff von Anspruch 1.

### Stand der Technik

Bearbeitungsaggregate der eingangs genannten Art werden beispielsweise im Bereich der Möbelindustrie eingesetzt, die Überstände angeleimter Kanten bündig zu der Oberfläche des Werkstücks zu fräsen. So offenbart beispielsweise die DE 40 30 138 C2 eine Maschine zum Anbringen und Bündigfräsen von Kantenstreifen.

So genannte Formfräsaggregate verrunden allseitig die Ecken einer an einem Werkstück angeleimten Kante und gleichen die Form der Ecke entsprechend der Werkstückkontur an. Man spricht auch von Eckenkopieren. Diese Bearbeitung geschieht an durchlaufenden Werkstücken, d.h. das Werkstück besitzt während der Bearbeitung eine Geschwindigkeit in einer Förderrichtung.

Für Formfräsaggregate, die das Werkstück bearbeiten, bedeutet dies nun, dass der Fräskopf um das durchlaufende Werkstück herum bewegt werden muss. Während der meist zweiachsigen Bewegungsabläufe muss das Aggregat wechselnde beschleunigte und verzögerte Bewegungen ausführen, die eine größtmögliche Dynamik voraussetzen. Hier hat sich gezeigt, dass bekannte Bearbeitungsaggregate der Dynamik und damit der Durchlaufgeschwindigkeit und Gesamtkapazität einer Kantenbearbeitungsmaschine Grenzen setzen. Ferner besitzen die bekannten Fräsaggregate eine vergleichsweise aufwändige Konstruktion.

Ferner beschreibt die US-A-2002/0182023 ein Kantenbearbeitungsaggregat nach dem Oberbegriff von Anspruch 1, bei dem ein Pneumatikmotor fest an dem inneren Gehäuse gehaltert ist. Die FR-A-2 323 496 offenbart ein Bearbeitungsaggregat mit verstellbarer Spansammelhaube.

### Darstellung der Erfindung

Es ist daher Aufgabe der vorliegenden Erfindung, ein Bearbeitungsaggregat der eingangs genannten Art bereitzustellen, das einen beschleunigten Bearbeitungsvorgang bei einfacher Konstruktion ermöglicht.

Diese Aufgabe wird erfindungsgemäß durch ein Bearbeitungsaggregat mit den Merkmalen von Anspruch 1 gelöst. Besonders vorteilhafte Weiterbildungen der Erfindung sind in den abhängigen Ansprüchen angegeben.

Der Erfindung liegt der Gedanke zugrunde, das Gewicht und die Anzahl der Bauteile eines Bearbeitungsaggregats deutlich zu vermindern, und zwar primär durch Integration mehrerer Funktionen in bestimmten Bauteilen. Zu diesem Zweck ist erfindungsgemäß vorgesehen, das bei einem gattungsgemäßen Bearbeitungsaggregat die Spansammelhaube eine Durchgangsöffnung aufweist, in die der Drehantrieb zumindest abschnittsweise hineinreicht, und das Gehäuse des Drehantriebes zumindest abschnittsweise in Gleitkontakt mit der Spansammelhaube im Bereich der Durchgangsöffnung steht.

Auf diese Weise kann die Spansammelhaube gleichzeitig mehrere Funktionen erfüllen, nämlich einerseits die Abführung der bei der Bearbeitung anfallenden Späne, und andererseits die verschiebbare (Gleit-)Führung des Drehantriebes. Hierdurch kann auf eine bisher erforderliche, eigene Führung für den Drehantrieb verzichtet werden, wodurch sich das Gewicht des Bearbeitungsaggregats beträchtlich vermindert und dessen Konstruktion vereinfacht. Ferner kann die durch die

Spansammelhaube verlaufende Spanströmung (die durch die Rotation des Bearbeitungswerkzeuges entsteht) zur Kühlung des Drehantriebes genutzt werden, so dass sich auch hier Vereinfachungen ergeben.

Gemäß der Erfindung ist vorgesehen, dass der Drehantrieb in Richtung seiner Drehachse gegenüber der Spansammelhaube verschiebbar ist. Auf diese Weise kann der Gleitkontakt zwischen dem Gehäuse des Drehantriebes und der Durchgangsöffnung der Spansammelhaube für ein präzises Einstellen der Relativpositionierung zwischen dem an dem Drehantrieb angeordneten Bearbeitungswerkzeug und dem zu bearbeitenden Werkstück genutzt werden.

Obgleich diese Verstellbewegung prinzipiell manuell bzw. durch geeignete mechanische Mittel erfolgen kann, ist gemäß einer Weiterbildung der Erfindung vorgesehen, dass das Bearbeitungsaggregat ferner einen Verstellantrieb aufweist, mittels dessen die Position des Drehantriebes und somit des Bearbeitungswerkzeuges in Bezug auf die Spansammelhaube verstellbar ist. Hierdurch ergibt sich eine zügige, fehlerfreie und auch während des Betriebes des Bearbeitungsaggregats durchführbare Verstellung des Drehantriebes bzw. des Bearbeitungswerkzeugs.

Die Spansammelhaube besitzt mindestens einen Spanleitdurchgang, der sich bevorzugt zumindest abschnittsweise parallel zur Drehachse des Drehantriebes erstreckt. Auf diese Weise trägt die Spansammelhaube besonders effektiv zur Kühlung des Drehantriebes bei, sodass die eigene Kühlung des Drehantriebes minimiert werden kann und sich so das Gewicht und die Konstruktion des gesamten Bearbeitungsaggregats weiter vermindern bzw. vereinfachen. Dabei ist es besonders bevorzugt, dass der mindestens eine Spanleitdurchgang bzw. mehrere Spanleitdurchgänge die Durchgangsöffnung der Spansammelhaube zumindest abschnittsweise umgeben, da sich hierdurch eine besonders gleichmäßige und wirksame Wärmeabführung ergibt.

Der Drehantrieb selbst kann im Rahmen der vorliegenden Erfindung auf unterschiedlichste Art und Weise ausgestaltet sein. Allerdings hat es sich als vorteilhaft erwiesen, dass gemäß einer Weiterbildung der Erfindung der Drehantrieb einen Synchronmotor aufweist, da dieser ein geringes Gewicht mit einer hohen Leistungsfähigkeit vereint. Dabei ist es besonders bevorzugt, dass der Drehantrieb frei von Rotorlagegebern arbeitet, d.h. es wird keine Rückführung vom Synchronmotor zu einer Steuereinrichtung benötigt. Hierdurch werden der Betrieb und die Steuerung des Synchronmotors drastisch vereinfacht, ohne dass dies für die im Rahmen der Erfindung bevorzugten Anwendungsfälle Nachteile mit sich bringt.

Um im Zuge der Bearbeitung Lagetoleranzen der jeweiligen Werkstücke ausgleichen zu können, ist gemäß einer Weiterbildung der Erfindung vorgesehen, dass das Bearbeitungsaggregat ferner eine Tastführung zum tastenden Bewegen des Bearbeitungsaggregats parallel zur Drehachse des Drehantriebs aufweist, die bevorzugt an der Spansammelhaube angeordnet ist. Hierdurch kann das Bearbeitungswerkzeug des Bearbeitungsaggregats je nach Lage des zu bearbeitenden Werkstücks (beispielsweise auf einem Förderband) in die gewünschte, passende Bearbeitungsposition verfahren werden.

Um hierbei eine automatische Anpassung der Positionierung des Bearbeitungsaggregats zu erzielen, ist gemäß einer Weiterbildung der Erfindung vorgesehen, dass das Bearbeitungsaggregat ferner mindestens zwei Tastelemente, insbesondere Tastrollen, aufweist, die dazu vorgesehen sind, gleitend oder rollend an den bearbeitenden Werkstücken anzuliegen.

Gemäß einer weiteren Zielrichtung stellt die vorliegende Erfindung eine Bearbeitungsmaschine bereit, die insbesondere zur spanenden Bearbeitung von Werkstücken im Kantenbereich vorgesehen ist. Die Bearbeitungsmaschine umfasst neben einem Bearbeitungsaggregat, wie es oben stehend beschrieben worden ist, eine Fördereinrichtung zum Fördern der zu bearbeitenden Werkstücke, sodass es sich um eine sogenannte Durchlaufmaschine handelt. Es ist jedoch zu beachten, dass die vorliegende Erfindung auch auf Fälle anwendbar ist, in denen (auch) das Bearbeitungsaggregat kontinuierlich oder periodisch bewegt wird. Dabei ist es besonders bevorzugt, dass das Bearbeitungsaggregat an der Fördereinrichtung jeweils mittels einer Tastführung angeordnet ist, um die oben beschriebenen Vorteile zu erzielen.

### Kurze Beschreibung der Zeichnungen

Fig. 1 zeigt schematisch eine geschnittene Seitenansicht einer Bearbeitungsmaschine als bevorzugte Ausführungsform der vorliegenden Erfindung;
Fig. 2 zeigt schematisch eine teilweise Schnittansicht aus Fig. 1, die entlang der Linie A-A in Fig. 1 geführt ist.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

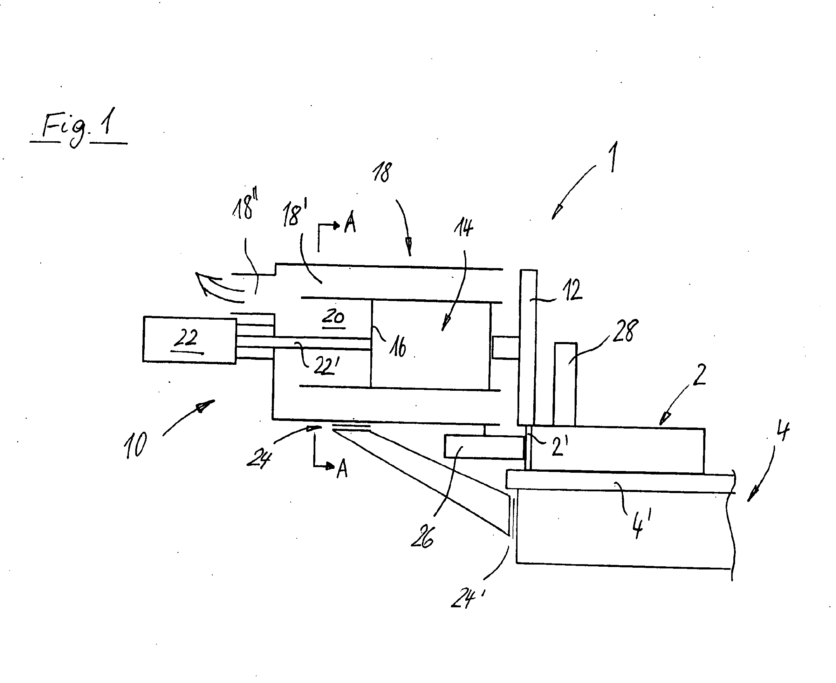

Eine Bearbeitungsmaschine 1 als bevorzugte Ausführungsform der vorliegenden Erfindung ist in Fig. 1 schematisch in einer teilweise freigeschnittenen Seitenansicht dargestellt. Die Bearbeitungsmaschine dient in der vorliegenden Ausführungsform zur spanenden Bearbeitung von Werkstücken 2, die beispielsweise zumindest zum Teil aus Holz, Holzwerkstoffen, Kunststoffen oder dergleichen bestehen, obgleich die vorliegende Erfindung nicht hierauf beschränkt ist. Genauer gesagt dient die Bearbeitungsmaschine 1 in der vorliegenden Ausführungsform zur Bearbeitung einer Kante 2', die an den jeweiligen Werkstücken 2 im Bereich einer Schmalfläche vorgesehen ist und beispielsweise angeleimt wurde. Dabei werden die jeweiligen zu bearbeitenden Werkstücke 2 in der Bearbeitungsmaschine 1 mittels einer Fördereinrichtung 4 in einer Durchlaufrichtung (senkrecht zur Zeichenebene von Fig. 1) gefördert, beispielsweise auf einem Förderband 4' oder einem Fördertisch.

Ferner umfasst die Bearbeitungsmaschine 1 ein Bearbeitungsaggregat 10 als bevorzugte Ausführungsform der vorliegenden Erfindung, die ein drehbar antreibbares Bearbeitungswerkzeug 12 aufweist, beispielsweise ein Fräswerkzeug, das beispielsweise dazu ausgelegt sein kann, die Kante 2' bündig oder mit einer geeigneten Fase bzw. Abrundung zu fräsen. Das Bearbeitungswerkzeug 12 ist an einer nicht näher bezeichneten Abtriebswelle eines Drehantriebes 14 angebracht, um durch den Drehantrieb um die Achse der Abtriebswelle herum angetrieben zu werden.

Der Drehantrieb 14 ist in einem Gehäuse 16 aufgenommen, das in der vorliegenden Ausführungsform im Wesentlichen zylindrisch ausgebildet ist, und ist in der vorliegenden Ausführungsform durch einen Synchronmotor gebildet, der mit einer nicht näher gezeigten Steuereinrichtung verbunden ist. Das Motormanagement des Synchronmotors beruht auf einem mathematischen Modell, bei dem alle benötigten Größen aus der Erfassung des Stromes abgeleitet werden. Im Rahmen dieses Modells ist es durch Berechnung möglich, die Lage des Läufers zu bestimmen und so die Kommutierung zu realisieren. Somit kann der Motor drehzahlgeregelt betrieben werden, und zwar ohne Rückführung, d.h. ohne Rotorlagegeber. Auf diese Weise ergibt sich eine sehr einfache Steuerung und Konstruktion.

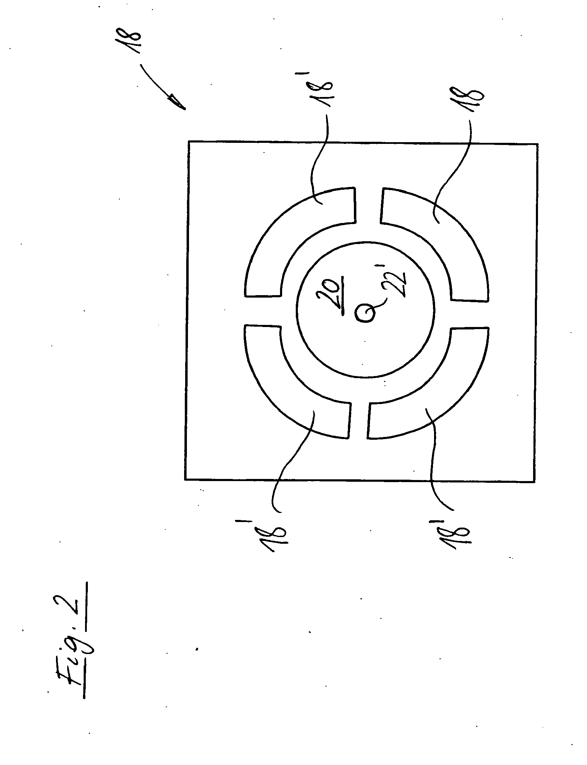

Ferner umfasst das Bearbeitungsaggregat 10 eine Spansammelhaube 18 zum Sammeln der im Bereich des Bearbeitungswerkzeugs 12 anfallenden Späne, wobei eine Schnittansicht der Spansammelhaube 18 in Fig. 2 näher gezeigt ist. Die Spansammelhaube besitzt eine zentrale Durchgangsöffnung 20, die derart auf die Geometrie des Gehäuses 16 des Drehantriebes 14 abgestimmt ist, dass der Drehantrieb 14 zumindest abschnittsweise in die Durchgangsöffnung 20 der Spansammehaube 18 hineinreicht, und zwar derart, dass das Gehäuse 16 in Gleitkontakt mit der Spansammelhaube 18 im Bereich der Durchgangsöffnung 20 steht.

In der vorliegenden Ausführungsform bedeutet dies konkret, dass das Gehäuse 16 und die Durchgangsöffnung 20 jeweils einen kreisförmigen Querschnitt besitzen, wobei der Außendurchmesser des Gehäuses 16 und der Durchmesser der Durchgangsöffnung 20 im Wesentlichen einander entsprechen. "Im Wesentlichen" bedeutet hier, dass zwischen dem Gehäuse 16 und der Durchgangsöffnung 20 je nach Materialkombination Umgebungsbedingungen, etc. ein geeigneter Spalt vorhanden sein kann, um beispielsweise Temperaturverformungen oder dergleichen ausgleichen zu können. Durch diese Konstruktion ist der Drehantrieb 14 in Richtung seiner Drehachse gegenüber der Spansammelhaube 18 verschiebbar, d.h. es liegt eine Gleitlagerung vor.

Obgleich das Gehäuse 16 in der vorliegenden Ausführungsform flächig bzw. sogar vollflächig an der Wandung der Durchgangsöffnung 20 anliegen kann, ist es im Rahmen der vorliegenden Erfindung ausreichend, dass das Gehäuse 16 zumindest abschnittsweise in Gleitkontakt mit der Wandung der Durchgangsöffnung 20 steht, wobei sich im Hinblick auf einen sanften und leichtgängigen Verschiebevorgang ein Kontaktbereich mit einer oder mehreren flächigen Kontaktstellen als vorteilhaft erwiesen hat.

Um die Verschiebung des Verstellantriebes 14 und somit des Bearbeitungswerkzeuges 12 in Bezug auf die Spansammelhaube 18 zu realisieren, umfasst das Bearbeitungsaggregat 10 ferner einen Verstellantrieb 22, der sich an der Spansammelhaube 18 abstützt und mit dem Drehantrieb 14 über eine Schubstange 22' verbunden ist.

Wie in Fig. 2 am besten zu erkennen ist, weist die Spansammelhaube 18 in der vorliegenden Ausführungs form vier Spanleitdurchgänge 18' auf, die sich parallel zur Drehachse des Drehantriebes 14 erstrecken. Dabei sind die Spanleitdurchgänge 18' derart angeordnet, dass sie die Durchgangsöffnung 20 der Spansammelhaube 18 abschnittsweise umgeben. In den Spanleitdurchgängen 18' stellt sich bereits infolge einer Rotation des Bearbeitungswerkzeugs 12 eine Luftströmung ein, welche bei der Bearbeitung anfallende Späne aus dem Bereich des Bearbeitungswerkzeugs abführt und über einer Austrittsöffnung 18" einem geeigneten Behälter bzw. einer weiterführenden Leitung zuführt. Dabei kann zur Verbesserung der Absaugwirkung zusätzlich eine Absaugvorrichtung (nicht gezeigt) angeordnet werden, die im Bereich der Austrittsöffnung 18'' eine Saugwirkung aufbringt. In jedem Falle ergibt sich durch die Luftströmung in den Spanleitdurchgängen 18' ein effizientes Kühlen des Drehantriebes 14.

Das Bearbeitungsaggregat 10 ist in der vorliegenden Ausführungsform an der Fördereinrichtung 4 über eine horizontale Tastführung 24 und eine vertikale Tastführung 24' zum tastenden Bewegen des Bearbeitungsaggregats parallel und senkrecht zur Drehachse des Drehantriebs 14 angebracht. Auf diese Weise können Lage- oder Dickentoleranzen der jeweiligen Werkstücke 2 auf der Fördereinrichtung 4 ausgeglichen werden, wobei das Bearbeitungsaggregat beispielsweise über eine nicht näher gezeigte Feder in Richtung zu der Fördereinrichtung 4 hin vorgespannt sein kann.

Dabei weist das Bearbeitungsaggregat 10 ferner eine horizontale Tastrolle 26 und eine vertikale Tastrolle 28 auf, die dazu vorgesehen sind, an den zu bearbeitenden Werkstücken 2 abzurollen und so in Zusammenwirken mit den Tastführungen 24, 24' die vertikale und horizontale Positionierung des Bearbeitungsaggregats 10 in Bezug auf das Werkstück 2 bzw. die Kante 2' automatisch festzulegen.

## Patentansprüche

1. Bearbeitungsaggregat (10) zur spanenden Bearbeitung von Werkstücken (2) im Bereich einer Kante (2'), mit:
einem drehbar antreibbaren Bearbeitungswerkzeug (12),
einem Drehantrieb (14) zum drehenden Antreiben des Bearbeitungswerkzeugs (12), wobei der Drehantrieb (14) ein Gehäuse (16) aufweist,
einer Spansammelhaube (18) zum Sammeln der im Bereich des Bearbeitungswerkzeugs (12) anfallenden Späne, wobei
die Spansammelhaube (18) eine Durchgangsöffnung (20) aufweist, in die der Drehantrieb (14) zumindest abschnittsweise hineinreicht,
wobei die Spansammelhaube (18) mindestens einen Spanleitdurchgang (18') besitzt, der sich zumindest abschnittsweise parallel zur Drehachse des Drehantriebes (14) erstreckt,
**dadurch gekennzeichnet, dass**
das Gehäuse (16) des Drehantriebes (14) zumindest abschnittsweise in Gleitkontakt mit der Spansammelhaube (18) im Bereich der Durchgangsöffnung (20) steht, so
dass der Drehantrieb (14) in Richtung seiner Drehachse gegenüber der Spansammelhaube (18) verschiebbar ist,

2. Bearbeitungsaggregat nach Anspruch 1, **dadurch gekennzeichnet, dass** es ferner einen Verstellantrieb (22) aufweist, mittels dessen die Position des Drehantriebes (14) und somit des Bearbeitungswerkzeugs (12) in Bezug auf die Spansammelhaube (18) verstellbar ist.

3. Bearbeitungsaggregat nach Anspruch 1 oder 2, **dadurch gekennzeichnet, dass** der mindestens eine Spanleitdurchgang (18') bzw. mehrere Späneleitdurchgänge (18') die Durchgangöffnung (20) der Spansammelhaube (18) zumindest abschnittsweise umgeben.

4. Bearbeitungsaggregat nach einem der vorhergehenden Ansprüche, **dadurch gekennzeichnet, dass** der Drehantrieb (14) einen Synchronmotor aufweist, der bevorzugt frei von Rotorlagegebern arbeitet.

5. Bearbeitungsaggregat nach einem der vorhergehenden Ansprüche, **dadurch gekennzeichnet, dass** es ferner eine Tastführung (24) zum tastenden Bewegen des Bearbeitungsaggregats parallel zur Drehachse des Drehantriebes (14) aufweist, die bevorzugt an der Spansammelhaube (18) angeordnet ist.

6. Bearbeitungsaggregat nach einem der vorhergehenden Ansprüche, **dadurch gekennzeichnet, dass** es ferner mindestens zwei Tastelemente (26, 28), insbesondere Tastrollen aufweist, die dazu vorgesehen sind, gleitend oder rollend an zu bearbeitenden Werkstücken (2) anzuliegen.

7. Bearbeitungsmaschine (1), insbesondere zur spanenden Bearbeitung von Werkstücken (2) im Bereich einer Kante (2'), mit
mindestens einem Bearbeitungsaggregat (10) nach einem der vorhergehenden Ansprüche, und
einer Förderereinrichtung (4) zum Fördern der zu bearbeitenden Werkstücke (2).

8. Bearbeitungsmaschine nach Anspruch 7, **dadurch gekennzeichnet, dass** das mindestens eine Bearbeitungsaggregat (10) mit der Fördereinrichtung (4) jeweils mittels einer Tastführung (24) verbunden ist.

## Claims

1. Machining unit (10) for machining of workpieces (2) in the region of an edge (2'), having:
a rotatably driven machining tool (12), a rotary drive (14) for rotatably driving of the machining tool (12), wherein the rotary drive (14) has a housing (16), a swarf collecting hood (18) for collecting the swarf being produced in the region of the machining tool (12), wherein the swarf collecting hood (18) has a passage opening (20) into which the rotary drive (14) extends at least in some sections, wherein the swarf collecting hood (18) has at least one swarf conducting passage (18') which extends at least in some sections parallel to the axis of rotation of the rotary drive (14), **characterised in that** the housing (16) of the rotary drive (14) is in sliding contact at least in some sections with the swarf collecting hood (18) in the region of the passage opening (20), so that the rotary drive (14) can be displaced in the direction of its axis of rotation with respect to the swarf collecting hood (18).

2. Machining unit according to claim 1, **characterised in that** it also has an adjusting drive (22), by means of which the position of the rotary drive (14) and hence of the machining tool (12) can be adjusted with respect to the swarf collecting hood (18).

3. Machining unit according to claim 1 or 2, **characterised in that** the at least one swarf conducting passage (18') or several swarf conducting passages (18') surround the passage opening (20) of the swarf collecting hood (18) at least in some sections.

4. Machining unit according to one of the preceding claims, **characterised in that** the rotary drive (14) has a synchronous motor which operates preferably free of rotor position sensors.

5. Machining unit according to one of the preceding claims, **characterised in that** it also has a sensing guide (24) for sensing movement of the machining unit parallel to the axis of rotation of the rotary drive (14), which is preferably arranged on the swarf collecting hood (18).

6. Machining unit according to one of the preceding claims, **characterised in that** it also has at least two sensing elements (26, 28), in particular sensing rollers, which are intended to rest in sliding or rolling manner on workpieces (2) to be machined.

7. Machining device (1), in particular for cutting machining of workpieces (2) in the region of an edge (2'), having at least one machining unit (10) according to one of the preceding claims, and a conveying device (4) for conveying the workpieces (2) to be machined.

8. Machining device according to claim 7, **characterised in that** the at least one machining unit (10) is connected to the conveying device (4) in each case by means of a sensing guide (24).

## Revendications

1. Groupe d'usinage (10) pour l'usinage par enlèvement de copeaux de pièces (2) au niveau d'une arête (2') avec un outil d'usinage (12) pouvant être entraîné par rotation, un entraînement par rotation (14) pour l'entraînement par rotation de l'outil d'usinage (12), l'entraînement par rotation (14) présentant un carter (16), un capot de collecte des copeaux (18) pour collecter les copeaux tombant au niveau de l'outil d'usinage (12), sachant que le capot de collecte des copeaux (18) présente une ouverture de passage (20) dans laquelle l'entraînement par rotation (14) pénètre au moins par tronçons, sachant que le capot de collecte des copeaux (18) possède au moins un passage de guidage des copeaux (18') qui est parallèle au moins par tronçons à l'axe de rotation de l'entraînement par rotation (14), **caractérisé en ce que** le carter (16) de l'entraînement par rotation (14) est en contact de glissement au moins par tronçons avec le capot de collecte des copeaux (18) au niveau de l'ouverture de passage (20) de façon à ce que l'entraînement par rotation (14) puisse être déplacé en direction de son axe de rotation par rapport au capot de collecte des copeaux (18).

2. Groupe d'usinage selon la revendication 1, **caractérisé en ce qu'**il présente en outre un mécanisme de réglage (22) au moyen duquel la position de l'entraînement par rotation (14) et donc de l'outil d'usinage (12) peut être réglée par rapport au capot de collecte des copeaux (18).

3. Groupe d'usinage selon la revendication 1 ou 2,
**caractérisé en ce que** l'au moins un passage de guidage des copeaux (18') respectivement plusieurs passages de guidage des copeaux (18') entourent au moins par tronçons l'ouverture de passage (20) du capot de collecte des copeaux (18).

4. Groupe d'usinage selon l'une des revendications précédentes, **caractérisé en ce que** l'entraînement par rotation (14) présente un moteur synchrone qui fonctionne de préférence sans capteurs de position du rotor.

5. Groupe d'usinage selon l'une des revendications précédentes, **caractérisé en ce qu'**il présente en outre un guidage par palpage (24) pour le déplacement par palpage du groupe d'usinage parallèlement à l'axe de rotation de l'entraînement par rotation (14) qui est placé de préférence sur le capot de collecte des copeaux (18).

6. Groupe d'usinage selon l'une des revendications précédentes, **caractérisé en ce qu'**il présente en outre au moins deux éléments de palpage (26, 28), en particulier des galets de palpage qui sont prévus pour venir se poser par glissement ou roulement sur des pièces à usiner (2).

7. Machine d'usinage (1), en particulier pour l'usinage par enlèvement de copeaux de pièces (2) au niveau d'une arête (2') comprenant au moins un groupe d'usinage (10) selon l'une des revendications précédentes, et un dispositif de transport (4) pour transporter les pièces à usiner (2).

8. Machine d'usinage selon la revendication 7, **caractérisée en ce que** l'au moins un groupe d'usinage (10) est relié au dispositif de transport (4) respectivement par un guidage par palpage (24).
